# FASCICULE DE BREVET EUROPEEN

(11) **EP 1 806 379 B1**
(45) Date de publication et mention de la délivrance du brevet: **22.12.2010**
(21) Numéro de dépôt: 06301005.2
(22) Date de dépôt: 03.10.2006
(51) Int. Cl.: C08J 3/22

(54) **Procédé de réticulation d'un polymère chargé et à base de polyéthylène**
Verfahren zur Vernetzung eines gefüllten Polymers auf Basis von Polyethylen
Method for the crosslinking of a filled polymer based on polyethylene

(30) Priorité: 04.01.2006 FR 0650030
(43) Date de publication de la demande: 11.07.2007
(73) Titulaire: Nexans, 75008 Paris (FR)
(72) Inventeur: Kensicher, Christèle, 69007, Lyon (FR); Boudiaf, Linda, 69520, Grigny (FR)
(74) Mandataire: Feray, Valérie

(56) Documents cités:
- EP-A- 0 245 938
- EP-A- 0 849 745
- EP-A- 1 502 923
- EP-A- 1 674 513
- WO-A-01/38060
- WO-A-97/24023
- WO-A-02/086005
- WO-A-2005/071007
- DE-A1-102004 061 983
- GB-A- 1 486 952
- US-A- 4 549 041
- US-A1- 2005 049 343

## Description

La présente invention concerne un procédé permettant de réticuler une composition qui associe un polymère greffé silane à base de polyéthylène, et une charge de nature quelconque.

L'invention trouve une application particulièrement avantageuse, mais non exclusive, dans le domaine des matériaux d'isolation pour câbles d'énergie et/ou de télécommunication.

Le polyéthylène est connu pour offrir d'excellentes propriétés diélectriques, ainsi qu'un faible prix de revient. C'est pourquoi il est aujourd'hui largement employé pour la réalisation des couches isolantes des câbles d'énergie et/ou de télécommunication.

Afin d'offrir des propriétés thermomécaniques majorées, le polyéthylène est généralement utilisé sous une forme réticulée. On sait en effet que la constitution d'un réseau de liaisons chimiques s'étendant suivant les différentes directions de l'espace, permet d'augmenter la tenue à la température de ce type particulier de matériau isolant.

La fabrication d'un polyéthylène réticulé s'effectue habituellement par réticulation silane. Cette technique désormais classique consiste dans un premier temps à greffer le polyéthylène de base avec un silane, par addition radicalaire à l'aide d'un peroxyde. Dans un second temps, on procède à la réticulation du composé ainsi greffé par hydrolyse puis condensation, ce qui nécessite la présence d'eau et d'un catalyseur de condensation. Il est à noter que ce dernier est communément constitué soit par du DBTL ou dibutyle dilaurate d'étain, soit par du DBTDL ou dibutyle trilaurate d'étain.

Avec un polyéthylène, la technique de réticulation silane présente toutefois l'inconvénient de ne pas pouvoir être mise en oeuvre directement à l'air ambiant dès lors que ledit polyéthylène est chargé. Or dans la câblerie, il est extrêmement courant que les matériaux isolants intègrent des charges. On pense ici notamment à des charges ignifugeantes destinées à améliorer le comportement au feu des câbles d'énergie et/ou de télécommunication.

Pour remédier à cette difficulté, les seules solutions utilisées à l'heure d'aujourd'hui consistent à mettre en oeuvre la seconde étape de réticulation de la technique silane, soit en piscine pendant 24h à 63°C, soit en sauna pendant 15h à 90°C.

Cependant, chacune de ces solutions s'avère particulièrement onéreuse en raison aussi bien de la valeur de l'équipement supplémentaire nécessaire, du prix de son énergie de fonctionnement, que du coût d'entretien de l'installation.

Par ailleurs, comme les encres de marquage ne supportent pas le passage en piscine ou en sauna, il n'est pas possible de marquer chaque câble directement en sortie d'extrudeuse et cette opération doit forcément s'effectuer en reprise à la sortie du bain d'eau liquide ou de vapeur d'eau. C'est ainsi que l'usage d'une piscine ou d'un sauna a pour conséquence de compliquer considérablement le procédé industriel de fabrication en terme logistique, ce qui au final occasionne une nouvelle fois un surcoût.

Par ailleurs, on peut également mentionner le document EP 1 674 513 qui décrit un procédé de préparation d'une pièce moulée obtenue par plastification et moulage d'une composition élastomère thermoplastique. La composition utilisée peut comprendre des additifs tels que par exemple un acide de Lewis choisi parmi divers composés du type dioctanoate d'étain, oxalate d'étain, oxyde d'étain, dilaurate de dioctyl-étain, dilaurate de dibutyl-étain, laurylstannoxane, carboxylate de dibutyl-étain, tris(2-éthylhexanoate) de monobutyl-étain, diisooctanoate de dibutyl-étain, diacétate de dibutyl-étain, oxyde de dibutyl-étain, et/ou un mélange de ces composés.

Aussi le problème technique à résoudre, par l'objet de la présente invention, est de proposer un procédé de fabrication d'un câble d'énergie et/ou de télécommunication dont l'étape de réticulation, mettant en oeuvre une composition comportant d'une part un polymère greffé silane à base de polyéthylène, et d'autre part une charge, permettrait d'éviter les problèmes de l'état de la technique en étant notamment sensiblement moins compliqué à mettre en oeuvre et donc implicitement moins onéreux.

La solution au problème technique posé réside selon la présente invention, dans le fait que le procédé de fabrication d'un câble d'énergie et/ou de télécommunication comportant au moins un revêtement isolant, comprend les étapes consistant à :
- mélanger une composition comportant d'une part un polymère greffé silane à base de polyéthylène, et d'autre part une charge, avec un catalyseur de condensation constitué par du lauryl stannoxane de formule [(C₄H₉)₂Sn(OOCC₁₁H₂₃)]₂O, le catalyseur de condensation étant conditionné sous forme de mélange maître,
- extruder la composition obtenue à l'étape précédente, et
- réticuler la composition extrudée pour former ledit revêtement isolant.

Il est entendu que la locution "polymère greffé silane" désigne classiquement un polymère sur lequel a été préalablement greffé un composé de type silane.

La notion de "polymère à base de polyéthylène" concerne quant à elle tout polyéthylène de basse, moyenne ou haute densité, ainsi que tout polyéthylène-octène (POE), et ce quels que soit leurs systèmes de polymérisation.

Par ailleurs, il est à noter que la charge peut à priori être de nature absolument quelconque.

L'invention telle qu'ainsi définie présente l'avantage de permettre la réticulation à l'air ambiant et en quelques jours d'un polyéthylène chargé, une réticulation complète étant atteinte dans un délai de moins de 45 jours. On peut donc ici véritablement parler d'auto-réticulation.

L'invention autorise par conséquent l'abandon de l'onéreuse et compliquée étape de passage en piscine ou en sauna, et donc la suppression des équipements correspondants. Indépendant de l'avantage financier purement matériel lié à cet suppression, le gain de temps qui en résulte permet d'améliorer la productivité.

Grâce à l'auto-réticulation, le marquage des câbles peut avantageusement s'opérer de manière continue, directement en sortie d'extrudeuse. Cela se traduit là encore par un gain de productivité.

Par ailleurs, l'emploi du nouveau catalyseur ne remet aucunement pas en cause le process industriel global de fabrication du câble, et donc les installations utilisées à l'heure actuelle. Cela signifie en d'autres termes que le procédé de réticulation objet de l'invention peut être très facilement mis en oeuvre au moyen des équipements de fabrication existants.

Selon l'invention, le catalyseur de condensation, conditionné sous forme de mélange maître, autorise une meilleure dispersion du lauryl stannoxane au sein du mélange, d'où une efficacité notablement plus importante. A effet équivalent, il est par conséquent possible d'employer sensiblement moins de catalyseur, ce qui implique un gain significatif en terme de coût.

Le conditionnement du lauryl stannoxane sous forme de mélange maître permet également de doser précisément la quantité de catalyseur réellement nécessaire, ce qui s'avère particulièrement intéressant étant donné que ce catalyseur est liquide et qu'il est destiné à être utilisé en très petite quantité.

De manière particulièrement avantageuse, le mélange maître est composé d'une matrice polymère dans laquelle est dispersé le lauryl stannoxane.

Cela sous-entend bien évidemment que la matrice polymère du mélange maître catalyseur soit compatible avec le polymère de base de la composition.

De préférence, la matrice polymère du mélange maître est de nature identique au polymère de base de la composition.

Cette caractéristique permet de ne pas modifier les propriétés notamment mécaniques et diélectriques du matériau final.

Conformément à une autre spécificité avantageuse, la composition comporte entre 0,0036 et 0,0108% de catalyseur de condensation.

Selon une autre caractéristique avantageuse, la composition comprend entre 90 et 190 pcr de charge.

A cet égard, il est entendu que dans l'ensemble de ce texte, l'abréviation pcr signifie classiquement "pour cent de résine". Elle désigne par conséquent la proportion en masse d'un composé considéré par rapport à une masse de polymère de base fixée arbitrairement à 100.

Selon une autre particularité de l'invention, la composition est en outre dotée d'au moins un additif choisi parmi un agent de mise en oeuvre, un antioxydant, un colorant, un anti-UV, un anti-cuivre.

De manière particulièrement avantageuse, la composition contient moins de 3 pcr d'agent de mise en oeuvre.

Conformément à une autre caractéristique avantageuse, la composition comporte entre 0,5 et 5 pcr d'antioxydant.

Selon une autre particularité de l'invention, le procédé de réticulation est mis en oeuvre à température ambiante.

Conformément à une autre caractéristique avantageuse de l'invention, le procédé de réticulation est mis en oeuvre à l'air ambiant.

D'autres caractéristiques et avantages de la présente invention apparaîtront au cours de la description des deux exemples comparatifs qui va suivre, lesdits exemples étant donnés à titre illustratif et nullement limitatif.

L'objectif de chacun de ces exemples I et II est de comparer le niveau de réticulation de deux mêmes matériaux polymères chargés lorsque ces derniers sont laissés réticulés à l'air libre, l'un comportant un catalyseur de condensation conforme à l'invention, l'autre ne disposant que d'un catalyseur de l'art antérieur.

### Exemple I

### Préparation des échantillons

On prépare deux échantillons de matériaux A et B à partir de deux compositions qui diffèrent donc l'une de l'autre uniquement de par la nature de leurs catalyseurs de condensation respectifs.

Concrètement, on mélange les différents constituants de chaque composition A ou B, on extrude le mélange obtenu, et on laisse réticuler à l'air libre l'échantillon extrudé correspondant. Il est à noter que dans chaque cas, le catalyseur de condensation est en fait ajouté lors de l'extrusion, sous forme de mélange maître.

Le tableau 1 détaille les compositions respectives des deux échantillons de matériaux A et B.

**Tableau 1**

| Echantillon | A | B |
|---|---|---|
| Polymère greffé silane (pcr) | 100 | 100 |
| Charge (pcr) | 110 | 110 |
| Agent de mise en oeuvre (pcr) | 3 | 3 |
| Antioxydant (pcr) | 1 | 1 |
| DBTL (%) | 0,072 | - |
| Lauryl stannoxane (%) | - | 0,072 |

Il est à noter que le polymère greffé silane de ce premier exemple est constitué par un polyéthylène basse densité linéaire qui est greffé à 1% de cocktail silane, ce dernier associant un peroxyde et un silane. Concrètement, il s'agit d'un produit commercialisé sous la dénomination "CLDO" par la société Polimeri Europa.

La charge est quant à elle de type ignifugeante puisqu'elle est composée de tri-hydroxyde d'Aluminium (ATH).

Le DBTL utilisé dans l'échantillon A est commercialisé par la société GOLDSCHMIDT, sous la référence Tegokat 218.

Le lauryl stannoxane utilisé dans l'échantillon B est commercialisé par la société GOLDSCHMIDT, sous la référence Tegokat 225.

### Fluage à chaud sous contrainte mécanique à 200°C

Afin de contrôler que chaque échantillon A et B a bien été réticulé, on lui fait passer un test normalisé de fluage à chaud sous contrainte mécanique, test qui est communément désigné par l'anglicisme "Hot set Test" et par l'abréviation HST.

Ce type de test est régi par la norme NF EN 60811-2-1. Il consiste concrètement à lester une extrémité d'une éprouvette de type haltère H2 avec une masse correspondant à l'application d'une contrainte équivalente à 0,2MPa, et à placer l'ensemble dans une étuve chauffée à une température de consigne donnée à +/-2°C pendant une durée de 15 minutes. Au terme de ce délai, on relève l'allongement à chaud sous contrainte de l'éprouvette, exprimé en %. La masse suspendue est alors retirée, et l'éprouvette est maintenue dans l'étuve pendant 5 nouvelles minutes. L'allongement permanent restant, également appelé rémanence, est alors mesuré avant d'être exprimé en %.

On rappelle que plus un matériau est réticulé, plus les valeurs d'allongement et de rémanence seront faibles. On précise par ailleurs que dans le cas où une éprouvette viendrait à se rompre en cours d'essai ou que son allongement serait supérieur à 100%, sous l'action conjuguée de la contrainte mécanique et de la température, le résultat au test serait alors logiquement considéré comme un échec.

Les résultats des essais de fluage à chaud sous contrainte mécanique à 200°C sont consignés dans le tableau 2 ci-dessous.

**Tableau 2**

| Echantillon | A | B |
|---|---|---|
| Hot Set Test (200°C) | échec | succès |
| Délai | J + 36 | J + 15 |
| Allongement (%) | - | 50 |
| Rémanence (%) | - | 10 |

On remarque tout d'abord que seul l'échantillon B passe avec succès le Hot Set Test à 200°C, et ce dès 15 jours seulement. Cela signifie qu'uniquement le catalyseur conforme à l'invention est en mesure de permettre l'auto-réticulation à l'air libre du polyéthylène chargé.

On observe à contrario que l'échantillon A (échantillon comparatif) n'est pas en mesure de réussir le Hot Set Test à 200°C, et ce même à 36 jours. Cela confirme le fait reconnu qu'un catalyseur typique de l'art antérieur est incapable de générer une auto-réticulation rapide d'un polyéthylène chargé.

### Exemple II

### Préparation des échantillons

Les deux échantillons de matériaux C et D de ce second exemple sont préparés de manière analogue à ce qui a été décrit dans le cadre de l'exemple I.

Le tableau 3 détaille les compositions respectives des deux échantillons en question.

**Tableau 3**

| Echantillon | C | D |
|---|---|---|
| Polymère greffé silane (pcr) | 100 | 100 |
| Charge (pcr) | 110 | 110 |
| Agent de mise en oeuvre (pcr) | 3 | 3 |
| Antioxydant (pcr) | 3 | 3 |
| DBTL (%) | 0,0036 | - |
| Lauryl stannoxane(%) | - | 0,0036 |

La grande différence par rapport au premier exemple provient de la nature spécifique du polymère greffé silane qui est commun aux échantillons C et D. Il s'agit en l'occurrence d'un polyéthylène-octène qui est greffé à 3% de cocktail silane, ce dernier associant ici aussi un peroxyde et un silane. Concrètement, on utilise un produit commercialisé sous la dénomination "Exact8203/LL4004(70/30)" par la société Exxon.

La charge est toujours de type ignifugeante, et en l'occurrence toujours composée de tri-hydroxyde d'Aluminium (ATH).

Le DBTL et le lauryl stannoxane utilisés respectivement dans les échantillons C et D sont de nature identique à ceux utilisés respectivement dans les échantillons A et B.

### Fluage à chaud sous contrainte mécanique à 200°C

On fait passer aux échantillons C et D le même test de fluage à chaud sous contrainte mécanique que pour l'exemple I. Les résultats des différents essais sont consignés dans le tableau 4 ci-dessous.

**Tableau 4**

| Echantillon | C | D |
|---|---|---|
| Hot Set Test (200°C) | échec | succès |
| Délai (jours) | J + 27 | J + 20 |
| Allongement (%) | - | 60 |
| Rémanence (%) | - | 0 |

Les conclusions sont tout à fait similaires à celles formulées dans le cadre de l'exemple I.

On remarque ainsi que seul l'échantillon D passe avec succès le Hot Set Test à 200°C, et ce dès 20 jours seulement. Cela confirme le fait qu'uniquement un catalyseur conforme à l'invention est en mesure de générer l'auto-réticulation à l'air libre d'un polyéthylène chargé.

On observe par ailleurs que l'échantillon C (échantillon comparatif) n'est quant à lui pas à même de réussir le Hot Set Test à 200°C, et ce même à 27 jours. C'est une nouvelle preuve qu'un catalyseur typique de l'art antérieur ne peut engendrer une auto-réticulation rapide d'un polyéthylène chargé.

## Revendications

1. Procédé de fabrication d'un câble d'énergie et/ou de télécommunication comportant au moins un revêtement isolant, ledit procédé comprenant les étapes consistant à :
- mélanger une composition comportant d'une part un polymère greffé silane à base de polyéthylène, et d'autre part une charge, avec un catalyseur de condensation constitué par du lauryl stannoxane de formule [(C₄H₉)₂Sn(OOCC₁₁H₂₃)]₂O, le catalyseur de condensation étant conditionné sous forme de mélange maître,
- extruder la composition obtenue à l'étape précédente, et
- réticuler la composition extrudée pour former ledit revêtement isolant.

2. Procédé de fabrication selon la revendication 1, **caractérisé en ce que** le mélange maître est composé d'une matrice polymère dans laquelle est dispersé le lauryl stannoxane.

3. Procédé de fabrication selon la revendication 2, **caractérisé en ce que** la matrice polymère du mélange maître catalyseur est de nature identique au polymère de base de la composition.

4. Procédé de fabrication selon l'une quelconque des revendications précédentes, **caractérisé en ce que** la composition comporte entre 0,0036 et 0,0108% de catalyseur de condensation.

5. Procédé de fabrication selon l'une quelconque des revendications précédentes, **caractérisé en ce que** la composition comporte entre 90 et 190 pcr de charge.

6. Procédé de fabrication selon l'une quelconque des revendications précédentes, **caractérisé en ce que** la composition comporte en outre au moins un additif choisi parmi un agent de mise en oeuvre, un antioxydant, un colorant, un anti-UV, un anti-cuivre.

7. Procédé de fabrication selon l'une quelconque des revendications précédentes, **caractérisé en ce que** la composition comporte moins de 3 pcr d'agent de mise en oeuvre.

8. Procédé de fabrication selon l'une quelconque des revendications précédentes, **caractérisé en ce que** la composition comporte entre 0,5 et 5 pcr d'antioxydant.

9. Procédé de fabrication selon l'une quelconque des revendications précédentes, **caractérisé en ce que** la réticulation est mise en oeuvre à température ambiante.

10. Procédé de fabrication selon l'une quelconque des revendications précédentes, **caractérisé en ce que** la réticulation est mise en oeuvre à l'air ambiant.

## Claims

1. A method for manufacturing a power and/or telecommunications cable including at least one insulating cladding, said method comprising the steps of:
- mixing a composition including a polyethylene-based grafted silane polymer on the one hand and a filler on the other hand, with a condensation catalyst formed by lauryl stannoxane of formula [(C₄H₉)₂Sn(OOCC₁₁H₂₃)]₂O, the condensation catalyst being conditioned as a master mix,
- extruding the composition obtained in the previous step, and
- cross-linking the extruded composition in order to form said insulating cladding.

2. The manufacturing method according to claim 1, **characterized in that** the master mix consists of a polymeric matrix in which lauryl stannoxane is dispersed.

3. The manufacturing method according to claim 2, **characterized in that** the polymeric matrix of the catalyst master mix is of the same nature as the base polymer of the composition.

4. The manufacturing method according to any of the preceding claims, **characterized in that** the composition includes between 0.0036 and 0.0108% of condensation catalyst.

5. The manufacturing method according to any of the preceding claims, **characterized in that** the composition includes between 90 and 190 pcr of filler.

6. The manufacturing method according to any of the preceding claims, **characterized in that** the composition further includes at least one additive selected from an application agent, an antioxidant, a coloring agent, an anti-UV agent, an anti-copper agent.

7. The manufacturing method according to any of the preceding claims, **characterized in that** the composition includes less than 3 pcr of application agent.

8. The manufacturing method according to any of the preceding claims, **characterized in that** the composition includes between 0.5 and 5 pcr of antioxidant.

9. The manufacturing method according to any of the preceding claims, **characterized in that** cross-linking is applied at room temperature.

10. The manufacturing method according to any of the preceding claims, **characterized in that** cross-linking is applied in ambient air.

## Patentansprüche

1. Verfahren zur Herstellung eines Energie- und/oder Telekommunikationskabels, das mindestens eine isolierende Umhüllung aufweist, wobei das Verfahren die Schritte umfasst, die bestehen im:
- Mischen einer Zusammensetzung, die einerseits ein silangepfropftes Polymer auf der Basis von Polyethylen aufweist und andererseits eine Charge mit einem Kondensationskatalysator, der von Laurylstannoxan der Formel [(C₄H₉)₂Sn(OOCC₁₁H₂₃)]₂O gebildet wird, wobei der Kondensationskatalysator in Form von Mastergemisch konditioniert ist,
- Extrudieren der im vorangegangenen Schritt hergestellten Zusammensetzung und
- Vernetzen der extrudierten Zusammensetzung, um die isolierende Umhüllung zu bilden.

2. Herstellungsverfahren nach Anspruch 1, **dadurch gekennzeichnet, dass** das Mastergemisch aus einer Polymermatrix besteht, in der das Laurylstannoxan dispergiert ist.

3. Herstellungsverfahren nach Anspruch 2, **dadurch gekennzeichnet, dass** die Polymermatrix des Katalysatorenmastergemischs identischer Art wie das Basispolymer der Zusammensetzung ist.

4. Herstellungsverfahren nach einem der vorangehenden Ansprüche, **dadurch gekennzeichnet, dass** die Zusammensetzung zwischen 0,0036 und 0,0108 % Kondensationskatalysator aufweist.

5. Herstellungsverfahren nach einem der vorangehenden Ansprüche, **dadurch gekennzeichnet, dass** die Zusammensetzung zwischen 90 und 190 pcr Charge aufweist.

6. Herstellungsverfahren nach einem der vorangehenden Ansprüche, **dadurch gekennzeichnet, dass** die Zusammensetzung weiterhin mindestens einen Zusatz aufweist, der aus einem Umsetzungsmittel, einem Antioxidans, einem Farbstoff, einem Anti-UV, einem Anti-Kupfer ausgewählt ist.

7. Herstellungsverfahren nach einem der vorangehenden Ansprüche, **dadurch gekennzeichnet, dass** die Zusammensatzung weniger als 3 pcr Umsetzungsmittel aufweist.

8. Herstellungsverfahren nach einem der vorangehenden Ansprüche, **dadurch gekennzeichnet, dass** die Zusammensetzung zwischen 0,5 und 5 pcr Antioxidans aufweist.

9. Herstellungsverfahren nach einem der vorangehenden Ansprüche, **dadurch gekennzeichnet, dass** die Vernetzung bei Umgebungstemperatur umgesetzt wird.

10. Herstellungsverfahren nach einem der vorangehenden Ansprüche, **dadurch gekennzeichnet, dass** die Vernetzung bei Umgebungsluft umgesetzt wird.
